# EUROPEAN PATENT SPECIFICATION

(11) **EP 1 975 432 B1**
(45) Date of publication and mention of the grant of the patent: **27.02.2013**
(21) Application number: 08005476.0
(22) Date of filing: 25.03.2008
(51) Int. Cl.: F16C 33/38

(54) **Ball bearing**
Kugellager
Roulement à billes

(30) Priority: 26.03.2007 JP 2007079505
(43) Date of publication of application: 01.10.2008
(73) Proprietor: JTEKT CORPORATION, Osaka-shi Osaka 542-8502 (JP)
(72) Inventor: Sekimoto, Hiroshi, Osaka-shi Osaka 542-8502 (JP)
(74) Representative: Weber, Joachim

(56) References cited:
- GB-A- 2 156 912
- US-A- 3 649 093
- US-A- 4 324 444
- US-A- 4 486 056
- US-A1- 2002 097 939

## Description

### BACKGROUND OF THE INVENTION

### 1. Field of the Invention

This invention relates to a ball bearing.

### 2. Related Art

One conventional ball bearing comprises an inner ring, an outer ring, balls, and a cage, and the cage includes two annular portions, and a plurality of bar portions interconnecting the two annular portions.

The inner ring is fitted on a rotation shaft, while the outer ring is fitted in a housing, and an inner peripheral surface of the outer ring guides an outer peripheral surface of at least one of the two annular portions of the cage.

In the ball bearing of the above construction, there are occasions when a shrill and harsh sound is generated by the cage during high-speed rotation of the inner ring. It is known that this cage sound is more liable to be generated particularly in the case of grease lubrication as compared with oil lubrication. (See, for example, JP-UM-A-6-32744.) US-A-2002/0097939 (closest prior art) discloses a cage for bearings. Thereby, a cage of the snap on type having pockets with mouths which open to one side of the cage is provided. The mouths are for reception of the balls as a snap fit when the cages introduced between the bearing wings from a side of the bearing.

### SUMMARY OF THE INVENTION

It is therefore an object of this invention to provide a ball bearing in which a cage sound is less liable to be generated even during the time when an inner ring rotates at a high speed of several tens of thousands rpm.

The above object has been achieved as described by claim 1.

The inventor of the present invention has examined the cause of a cage sound, and has found that there is the relation between the cage sound and the axial length of the guide portion of the cage guided by the peripheral surface of the bearing ring.

Also, in a plurality of tests in which a rotational speed of an inner ring was set to several tens of thousands rpm, the inventor has found that when the axial length of the guide portion of the cage is not more than 8.2% of the diameter of the ball, the proportion of those tested bearings (in which the cage sound was generated) to the total tested bearings is much reduced to 25%.

In the present invention, the axial length of the guide portion of the cage is not more than 8.2% of the ball diameter; and therefore the probability of generation of the cage sound can be reduced to about 25% even when the rotational speed of the inner ring is high.

Furthermore, in the invention, merely by reducing the axial length of the guide portion, the probability of generation of the cage sound can be reduced, and therefore the possibility of generation of the cage sound can be reduced easily at a low cost without requiring much time and labor.

In one preferred form of the invention, the cage has an annular convex surface radially opposed to the peripheral surface of the first bearing ring, and the guide portion is defined by an outer peripheral edge of the convex surface.

In this case, theoretically, the guide portion assumes one point in an axial cross-section of the convex surface. Therefore, the generation of the cage sound can be prevented even when the rotational speed of the inner ring is high.

In the ball bearing of the present invention, the axial length of the guide portion of the cage guided by the peripheral surface of the first bearing ring is not more than 8.2% of the diameter of the ball, and therefore the probability of generation of the cage sound can be reduced to about 25% even when the rotational speed of the inner ring is high.

Furthermore, in the ball bearing of the invention, merely by reducing the axial length of the guide portion, the probability of generation of the cage sound can be reduced, and therefore the possibility of generation of the cage sound can be reduced easily at the low cost without requiring much time and..labor.

### BRIEF DESCRIPTION OF THE DRAWINGS

Fig. 1 is an axial cross-sectional view of a first embodiment of a ball bearing of the present invention.
Fig. 2 is a diagram showing part of test results of one test example.
Fig. 3 is an axial cross-sectional view of a second embodiment of a ball bearing of the invention.

### DETAILED DESCRIPTION OF THE PREFERRED EMBODIMENTS

Preferred embodiments of the present invention will now be described with reference to the drawings.

### (First Embodiment)

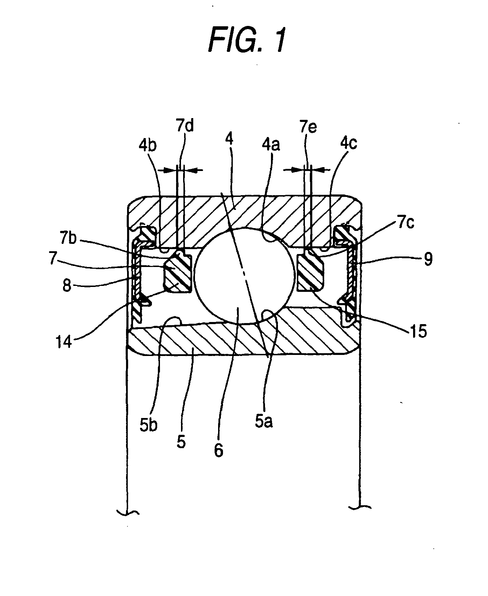

Fig. 1 is an axial cross-sectional view of a first embodiment of a ball bearing of the invention.

This ball bearing is a so-called angular contact ball bearing and is a sealing-type grease lubrication bearing which is served in a state that grease is sealed within the bearing. The ball baring is mounted between a spindle and a housing of a machine tool. The spindle is rotated at a high rotational speed of several tens of thousands rpm during the operation of the machine tool.

The ball bearing comprises an outer ring 4 serving as a first bearing ring, an inner ring 5 serving as a second bearing ring, a plurality (or row) of balls 6, a cage 7, a first seal member 8, and a second seal member 9.

The outer ring 4 is formed of a metal material such as bearing steel, for example. The outer ring 4 has a raceway groove 4a formed in its inner periphery, and a first shoulder portion at one side of the raceway groove 4a in an axial direction has a cylindrical inner peripheral surface 4b, while a second shoulder portion at the other side of the raceway groove 4a in the axial direction has a cylindrical inner peripheral surface 4c. The outer ring 4 includes a first seal member-fitting groove of an annular shape disposed axially outwardly of the first shoulder portion, and a second seal member-fitting groove of an annular shape disposed axially outwardly of the second shoulder portion.

On the other hand, the inner ring 5 is formed of a metal material such as bearing steel, for example. The inner ring 5 has a raceway groove 5a formed in an outer periphery thereof. The inner ring 5 includes a counterbore 5b at one side of the raceway groove 5a in the axial direction such that the inner ring 5 has a tapered outer peripheral surface formed at the one side of the raceway groove 5a and decreasing in outer diameter gradually outward in the axial direction. The inner ring 5 includes a shoulder portion at the other side of the raceway groove 5a, and a seal member-receiving groove of an annular shape disposed axially outwardly of this shoulder portion.

The plurality of balls 6 are formed of a ceramic material, for example. The plurality of balls 6 are retained by the cage 7 such that the balls 6 are disposed between the raceway groove 4a of the outer ring 4 and the raceway groove 5a of the inner ring 5, and are arranged at intervals in a circumferential direction. The cage 7 includes a first annular portion 14, a second annular portion 15, and a plurality of bar portions (not shown). The bar portions interconnect the first and second annular portions 14 and 15. The plurality of bar portions are arranged at intervals in the direction of the circumference of the first annular portion 14.

The first annular portion 14 has a projecting portion 7b projecting radially outwardly from its outer peripheral surface. The projecting portion 7b has a cylindrical outer peripheral surface, and an axial length 7d of this cylindrical outer peripheral surface is not more than 8.2% of a diameter of the ball 6. The second annular portion 15 has a projecting portion 7c projecting radially outwardly from its outer peripheral surface. The projecting portion 7c has a cylindrical outer peripheral surface, and an axial length 7e of this cylindrical outer peripheral surface is not more than 8.2% of the diameter of the ball 6. The cylindrical outer peripheral surface of the projecting portion 7b and the cylindrical outer peripheral surface of the projecting portion 7c form or define guide portions, respectively.

An outer peripheral edge portion (radially-outward portion) of the annular first seal member 8 is fitted in the first seal member-fitting groove in the outer ring 4, while an inner peripheral edge (radially-inward portion) of the first seal member 8 is radially opposed to the tapered outer peripheral surface of the inner ring 5 in slightly spaced relation thereto. On the other hand, an outer peripheral edge portion (radially-outward portion) of the annular second seal member 9 is fitted in the second seal-fitting groove in the outer ring 4, while an inner peripheral edge portion (radially-inward portion) of the second seal member 9 is fitted in the seal member-receiving groove in the inner ring 5 in non-contact relation to an inner surface of this seal member-receiving groove.

The first seal member 8 and the second seal member 9 seal a space between the outer ring 4 and the inner ring 5, thereby protecting the raceway grooves 4a and 5a and the balls 6 from the exterior. Grease is sealed in the space formed by the first seal member 8, the second seal member 9, the outer ring 4 and the inner ring 5. The grease lubricates the raceway grooves 4a and 5a and the balls 6, thereby preventing seizure of the raceway grooves 4a and 5a and the balls 6.

The inventor of the present invention prepared ball bearings of the first embodiment and various comparative ball bearings identical in constituent elements to the ball bearing of the first embodiment except the axial lengths of the above guide portions, and conducted tests to check whether or not a cage sound was generated.

In one test example, a number of cage race-guiding type ball bearings (Model No. 3NC7000C-13/2B2FUFA; Ball Diameter: 4.7625 mm (3/16")) which were different in axial length of the above-mentioned guide portions and had grease (grease equivalent to 7000) sealed therein were used as test bearings. In each test bearing, a rotational speed was gradually increased from 0 r/min. to 60,000 r/min, and it was checked whether or not a large cage sound was generated in the process of increasing the rotational speed. This check was effected twenty times for each test bearing. When a shrill and harsh sound was irregularly generated in the range of between 20, 000 r/min. to 40,000 r/min, it was judged that a cage sound was generated.

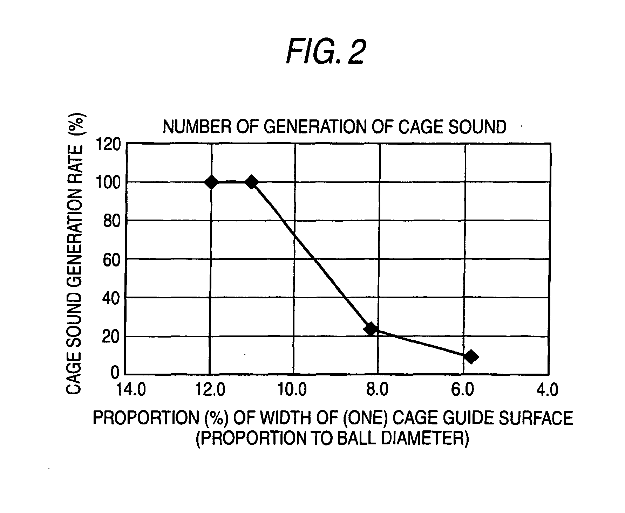

Table 1 below show part of test results of the one test example, and Fig. 2 shows part of the test results of the one test example. Although not described in detail, the inventor of the present invention conducted the same tests as the above test, combining bearings of various models with various greases, and it was checked whether or not a cage sound was generated. As a result, it was confirmed that test results similar to the test results of the one test example were obtained.

**Table 1**

| Sample No. | (1) | (2) | (3) | (4) |
|---|---|---|---|---|
| Axial length of guide portion (One): mm | 0.57 | 0.53 | 0.39 | 0.28 |
| Proportion of guide portion to ball diameter: % | 12.0 | 11.1 | 8.2 | 5.6 |
| Number of generations of cage sound: times | 20 | 20 | 5 | 2 |
| Cage sound generation rate: % | 100 | 100 | 25 | 10 |

As shown in Table 1 and Fig. 2, in Samples (1) and (2) in which the proportion of the guide portion to the ball diameter (the diameter of the ball) is 11.1% or more, the cage sound generation rate is 100%. On the other hand, in Sample (3) in which the proportion of the guide portion to the ball diameter is 8.2%, the cage sound generation rate abruptly drops to 25%. Further, in Sample (4) in which the proportion of the guide portion to the ball diameter is 5.6%, the cage sound generation rate drops to 10%.

It will be appreciated from the foregoing that when the proportion of the guide portion to the ball diameter is not more than 8.2%, the probability of generation of the cage sound can be much reduced to not more than 25%.

In the ball bearing of the first embodiment, the axial length of the guide portion of the cage is not more than 8.2% of the ball diameter, and therefore the probability of generation of the cage sound (which is 100% when the axial length of the guide portion of the cage is 11.1% of the ball diameter) can be much reduced to about 25% even when the rotational speed of the inner ring 4 is high.

Although the mechanism of generation of the cage sound is not clear, the inventor of the present invention surmises that the striking (rebounding) of the cage against the peripheral surface of the bearing ring occurs in synchronism with a self-induced vibration of the cage, so that energy of the vibration of the cage becomes excessive, thereby generating the cage sound.

In the invention, any material can be used for the cage in so far as it is a resin material. However, as the material for the cage of a high-speed design, it is preferred to use a material which has a high modulus of elasticity and is hard. More specifically, it is preferred to use PA1 (aromatic polyamide-imide resin), PI (polyimide) containing graphite, PEEK (polyether etherketone), etc., as the material for the cage.

In the above first embodiment, the first and second annular portions 14 and 15 have the projecting portions 7b and 7c projecting radially outwardly respectively from their outer peripheral surfaces, and the cylindrical outer peripheral surfaces of the projecting portions 7b and 7c form the guide portions, respectively. In the present invention, however, the outer peripheral surface of each of the annular portions of the cage may not have the projecting portion, in which case the annular portion has a trapezoidal cross-section, and an axial length of an upper bottom of this trapezoid is not more than 8.2% of the ball diameter.

Furthermore, in the above first embodiment, the two guide portions are disposed respectively at the opposite sides of the row of balls 6 in the axial direction. However, in the invention, only one guide portion may be disposed at only one side of the row of balls.

Furthermore, in the above first embodiment, although the ball bearing is the angular contact ball bearing, the ball bearing of the invention may be a deep groove ball bearing.

Furthermore, in the above first embodiment, the guide portions are guided by the inner peripheral surface of the outer ring 4. However, in the invention, guide portions of the cage may be guided by the outer peripheral surface of the inner ring. In this case, of course, the inner ring serves as the first bearing ring, while the outer ring serves as the second bearing ring.

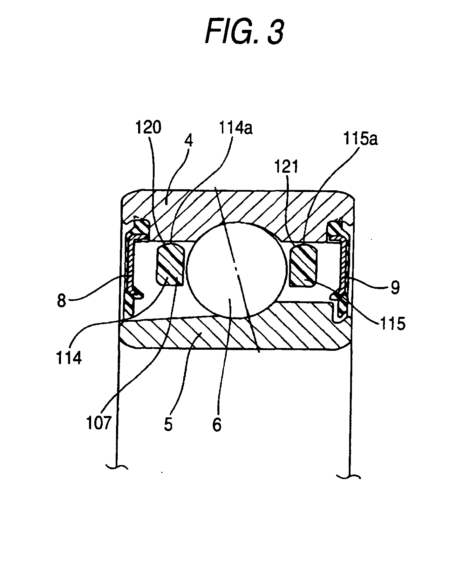

Fig. 3 is an axial cross-sectional view of a second embodiment of a ball bearing of the invention.

The ball bearing of the second embodiment differs from the ball bearing of the first embodiment in that an outer peripheral surface of a first annular portion 114 of a cage 107 is formed into an annular convex surface 120 while an outer peripheral surface of a second annular portion 115 is formed into an annular convex surface 121 and that outer peripheral edges (radially-outermost portions) of the convex surfaces 120 and 121 form or define guide portions, respectively.

In the second embodiment, those constituent portions of the ball bearing identical to those of the ball bearing of the first embodiment will be designated by identical reference numerals, respectively, and description thereof will be omitted. Also, in the second embodiment, description of operational effects and modifications similar to those of the first embodiment will be omitted, and only the construction and operational effects-different from the first embodiment will be described.

In the ball bearing of the second embodiment, the outer peripheral surface of the first annular portion 114 of the cage 107 is formed into the annular convex surface 120, while the outer peripheral surface of the second annular portion 115 of the cage 107 is formed into the annular convex surface 121. In other words, in an axial cross-section of the cage 107, the outer peripheral surface of the first annular portion 114 is smoothly curved to be convex radially outwardly, and also the outer peripheral surface of the second annular portion 115 is smoothly curved to be convex radially outwardly. The outer peripheral edges (radially-outermost portions) of the convex surfaces 120 and 121 form the guide portions, respectively.

In the ball bearing of the second embodiment, each of the guide portions assumes one point in the axial cross-section of the cage 107. Therefore, the axial length of the guide portion is a theoretically-available minimum value, and therefore even when the rotational speed of an inner ring 5 is high, the generation of a cage sound can be prevented.

## Claims

1. A ball bearing comprising:
a first bearing ring (4) having a raceway groove (4a);
a second bearing ring (5) having a raceway groove (5a);
a row of balls (6) disposed between said raceway groove (4a) of said first bearing ring (4) and said raceway groove (5a) of said second bearing ring (5); and
a resin-made cage holding said row of balls (6), said cage (7, 107) having an annular guide portion (76, 74) which is disposed at least at one side of said row of balls (6) in an axial direction of said first bearing ring (4), and is guided by a peripheral surface (4b, 4c) of said first bearing ring (4);
**characterized in that**
a length (7A, 7c) of said guide portion in said axial direction is not more than 8.2% of a diameter of said ball (6).

2. A ball bearing according to claim 1, **characterized in that** said cage (107) has an annular convex surface (120, 121) radially opposed to said peripheral surface (4b, 4c) of said first bearing ring (4); and
said guide portion (7b, 7c) is defined by an outer peripheral edge of said convex surface (120, 121).

3. A ball bearing according to claim 1 or 2, **characterized in that** said ball bearing is mounted between a spindle and a housing of a machine tool, and
said ball bearing is served in a state that grease is sealed therein.

## Patentansprüche

1. Kugellager, umfassend:
- einen ersten Lagerring (4) mit einer Laufringnut (4a);
- einen zweiten Lagerring (5) mit einer Laufringnut (5a);
- eine Reihe von Kugeln (6), die zwischen der Laufringnut (4a) des ersten Lagerrings (4) und der Laufringnut (5a) des zweiten Lagerrings (5) angeordnet sind; und
- einen aus Kunststoff hergestellten Käfig (7, 107), der die Reihe von Kugeln (6) hält, wobei der Käfig (7, 107) einen ringförmigen Führungsbereich (7b, 7c) aufweist, der zumindest an einer Seite der Reihe von Kugeln (6) in axialer Richtung des ersten Lagerrings (4) angeordnet ist, und durch eine Umfangsfläche (4b, 4c) des ersten Lagerrings (4) geführt wird;
**dadurch gekennzeichnet, dass**
- eine Länge (7d, 7e) des Führungsbereichs (7b, 7c) in axialer Richtung nicht mehr als 8,2 % eines Durchmessers der Kugel (6) ist.

2. Kugellager gemäß Anspruch 1, **dadurch gekennzeichnet,**
- **dass** der Käfig (107) eine ringförmige konvexe Fläche (120, 121) aufweist, die der Umfangsfläche (4b, 4c) des ersten Lagerrings (4) gegenüberliegt; und
- **dass** der Führungsbereich (7b, 7c) durch eine äußere Umfangskante der konvexen Fläche (120, 121) ausgebildet wird.

3. Kugellager gemäß Anspruch 1 oder 2, **dadurch gekennzeichnet,**
- **dass** das Kugellager zwischen einer Spindel und einem Gehäuse einer Werkzeugmaschine befestigt ist, und
- **dass** das Kugellager in einem Zustand vorgegeben wird, das Schmierfett darin eingeschlossen ist.

## Revendications

1. Roulement à billes comprenant :
une première bague de roulement (4) présentant une rainure formant piste (4a) ;
une seconde bague de roulement (5) présentant une rainure formant piste (5a) ;
une rangée des billes (6) disposées entre ladite rainure de piste (4a) de ladite première bague de roulement (4) et ladite rainure de piste (5a) de ladite seconde bague de roulement (5) ; et
une cage réalisée en résine (7, 107) retenant ladite rangée des billes (6), ladite cage (7, 107) présentant une partie de guidage annulaire (7b, 7c) qui est disposée au moins d'un côté de ladite rangée des billes (6) dans une direction axiale de ladite première bague de roulement (4), et est guidée par une surface périphérique (4b, 4c) de ladite première bague de roulement (4) ;
**caractérisé en ce que**
une longueur (7d, 7e) de ladite partie de guidage (7b, 7c) dans ladite direction axiale n'est pas supérieure à 8,2 % d'un diamètre de ladite bille (6).

2. Roulement à billes selon la revendication 1, **caractérisé en ce que** ladite cage (107) présente une surface annulaire convexe (120, 121) radialement opposée à ladite surface périphérique (4b, 4c) de ladite première bague de roulement (4) ; et
ladite partie de guidage (7b, 7c) est définie par un bord périphérique externe de ladite surface convexe (120, 121).

3. Roulement à billes selon la revendication 1 ou 2, **caractérisé en ce que** ledit roulement à billes est monté entre une broche et un logement d'une machine outil, et
ledit roulement à billes est utilisé dans un état tel que de la graisse est contenue de manière étanche à l'intérieur.
